# FASCICULE DE BREVET EUROPEEN

(11) **EP 3 855 884 B1**
(45) Date de publication et mention de la délivrance du brevet: **02.11.2022**
(21) Numéro de dépôt: 19768852.6
(22) Date de dépôt: 18.09.2019
(51) Int. Cl.: A01F 15/08

(54) **PRESSE A BALLES AYANT UNE MOTORISATION HYDRAULIQUE**
BALLENPRESSE MIT EINEM HYDRAULIKMOTOR
BALLER WITH AN HYDRAULIC MOTOR

(30) Priorité: 27.09.2018 FR 1858848
(43) Date de publication de la demande: 04.08.2021
(73) Titulaire: Hyler BVBA, 8710 Sint-Baafs-Vijve (BE)
(72) Inventeur: BAERT, Niels, 8710 Sint-Baafs-Vijve (BE)
(74) Mandataire: Arnold & Siedsma
(86) Numéro de dépôt international: PCT/EP2019/075019
(87) Numéro de publication internationale: WO 2020/064460

(56) Documents cités:
- EP-A1- 3 308 635
- EP-A2- 0 346 586

## Description

### Arrière-plan de l'invention

L'invention concerne le domaine des machines pour réaliser des balles à partir de végétaux. Ce type de machine est généralement appelé « presse à balles ». Cette invention concerne plus précisément une machine pour réaliser des balles présentant une forme sensiblement parallélépipédique. De telles balles sont le plus souvent appelées « balles rectangulaires ».

Traditionnellement, les machines pour réaliser les balles comportent :
une chambre de pressage ;
un dispositif d'amenée pour amener les végétaux dans la chambre de pressage ;
un piston mobile en translation dans la chambre de pressage pour presser les végétaux;
un dispositif d'entrainement ayant un organe de couplage agencé pour être connecté à un élément d'entrainement en rotation, le dispositif d'entrainement étant par ailleurs agencé pour entrainer le piston en translation.

Une telle machine est notamment décrite dans le document EP 0 346 586.

Ce type de machine comporte généralement un dispositif de transmission excentrique associé à un volant d'inertie, le dispositif de transmission excentrique étant agencé pour transformer un mouvement de rotation, généré par l'élément d'entrainement en rotation - le plus souvent une prise de puissance d'un tracteur - en un mouvement de translation du piston.

Traditionnellement, le volant d'inertie se met en mouvement et le piston se déplace en translation dès que la prise de puissance du tracteur commence à tourner. Ceci permet de déplacer immédiatement le piston. On comprend que le démarrage de la machine, et notamment la mise en rotation du volant d'inertie, consomme beaucoup d'énergie.

Par ailleurs, le piston effectue des va-et-vient dans la chambre de pressage tant que le volant d'inertie tourne, et ce quel que soit le taux de remplissage de la chambre de pressage.

Qui plus est, la puissance que doit fournir l'élément d'entrainement en rotation, à savoir la prise de puissance du tracteur, présente un pic à chaque fois que le piston comprime les végétaux contenus dans la chambre de pressage, ce qui est contraignant pour les éléments constitutifs du tracteur.

Dans les machines traditionnelles, les végétaux sont ramassés et sont introduits dans une chambre de pré-pressage. Le dispositif d'entrainement et le piston fonctionnent de façon continue. Les végétaux contenus dans la chambre de pré-pressage sont ensuite poussés dans la chambre de pressage au moment où le piston est au point mort bas. En raison d'une vitesse de remplissage irrégulière de la chambre de pressage, ou bien en raison d'un ramassage irrégulier des végétaux, le piston effectue parfois jusqu'à 60 allers-retours avant que la chambre de pressage ne contienne la quantité suffisante de végétaux pour former une balle, ce qui constitue une perte d'énergie inutile.

### Objet et résumé de l'invention

Un but de l'invention est de proposer une machine pour réaliser des balles de forme rectangulaire à partir de végétaux nécessitant moins d'énergie que les machines traditionnelles pour former des balles.

L'invention atteint son but par le fait que le dispositif d'entrainement comporte en outre :
un dispositif hydraulique comprenant
   une pompe hydraulique reliée à l'organe de couplage ;
   un moteur hydraulique alimenté par la pompe hydraulique ;
un organe d'entrainement entrainé par le moteur hydraulique et configuré pour déplacer le piston en translation ; et
un dispositif de commande relié au dispositif hydraulique pour commander le déplacement du piston.

Lors de la première mise en rotation de l'élément d'entrainement, tel que par exemple la prise de puissance du tracteur, seul l'arbre de transmission de la pompe hydraulique est mis en rotation via l'organe de couplage. En conséquence, le moteur hydraulique n'est pas immédiatement mis en rotation de sorte que l'organe d'entrainement et le piston ne sont pas mis en mouvement. Aussi, la mise en route de la machine selon l'invention nécessite sensiblement moins de puissance que la machine selon l'art antérieur.

En outre, le déplacement du piston peut être commandé lorsqu'il est décidé de réaliser l'opération de pressage, ce qui permet d'éviter de faire fonctionner le piston alors que la chambre de pressage n'est pas suffisamment remplie ou vide. Pour ce faire, le dispositif de commande agit sur le dispositif hydraulique, notamment sur la pompe et/ou sur le moteur, afin d'actionner le moteur hydraulique, ce qui provoque le déplacement du piston dans la chambre de pressage. Le déplacement du piston dans la chambre de pressage est avantageusement commandé lorsque cette dernière contient suffisamment de matière végétale, afin de réaliser le pressage. On obtient alors une portion de balle pressée. Ensuite, le piston se déplace dans un sens opposé au sens de pressage afin de dégager la chambre de pressage. On amène ensuite des végétaux dans la chambre de pressage jusqu'à remplissage de cette dernière. Une fois que la chambre de pressage est suffisamment remplie, on déplace le piston afin de presser une deuxième portion de balle, et ainsi de suite, jusqu'à former une balle complète. On comprend que la balle complète est constituée de plusieurs portions de balles juxtaposées, pressées et de préférence ficelées ensemble.

Le dispositif de commande peut être actionné manuellement ou bien automatiquement comme expliqué ci-dessous.

La machine selon l'invention peut donc être dépourvue de volant d'inertie. La machine peut également être dépourvue de chambre de pré-pressage.

On comprend par ailleurs que le dispositif de commande est relié à la pompe hydraulique et/ou au moteur hydraulique, et est configuré pour commander et/ou réguler l'alimentation du moteur hydraulique.

Avantageusement, la machine selon l'invention comporte en outre au moins un capteur, disposé dans la chambre de pressage, pour déterminer le taux de remplissage de la chambre de pressage, ledit capteur étant relié au dispositif de commande, et le dispositif de commande est configuré pour actionner le déplacement du piston lorsque le taux de remplissage est supérieur à un seuil prédéterminé.

Ce capteur comporte par exemple des plaquettes sur lesquelles les végétaux appuient lorsqu'ils occupent un volume important et prédéfini dans la chambre de pressage. Sans sortir du cadre de la présente invention, la chambre de pressage pourra être munie de plusieurs capteurs.

Le taux de remplissage peut également être un niveau de remplissage.

Aussi, grâce à l'invention, le piston n'est actionné qu'à partir du moment où il a été détecté que la chambre de pressage est suffisamment remplie. La machine selon l'invention est donc plus efficiente que les machines traditionnelles, dès lors que le piston est déplacé à partir du moment où la quantité suffisante de végétaux est présente dans la chambre de pressage pour former une balle rectangulaire, et non pas de manière ininterrompue comme dans l'art antérieur.

Avantageusement, l'organe d'entrainement comporte un dispositif du type bielle/manivelle. De préférence, il comporte une roue ou un tambour, non nécessairement inertiel, faisant office de bielle, qui est relié au piston via une bielle.

Avantageusement, la pompe hydraulique est à débit variable, de préférence à cylindrée variable. Un intérêt est de pouvoir moduler le débit et donc la puissance délivrée au moteur hydraulique.

De préférence, le dispositif de commande est également configuré pour modifier la cylindrée de la pompe hydraulique.

Avantageusement, le moteur hydraulique est à débit variable, de préférence à cylindrée variable, ce qui permet de réguler l'effort délivré au piston.

Le dispositif de commande est avantageusement configuré pour régler la cylindrée du moteur hydraulique. De préférence, le moteur hydraulique est régulé de sorte que la pression hydraulique est constante et maximale.

Selon un aspect particulièrement avantageux de l'invention, le dispositif hydraulique comporte en outre au moins un accumulateur hydraulique relié à la pompe hydraulique.

Lors du démarrage de la machine, la pompe hydraulique est mise en rotation et charge l'accumulateur. Le piston n'est pas mis en mouvement.

L'accumulateur se comporte comme une réserve de puissance et permet notamment de pallier un écart de puissance entre la puissance consommée par le moteur et la puissance disponible sur le dispositif d'entrainement. Ceci permet de réduire sensiblement la puissance requise par rapport à une machine traditionnelle.

Avantageusement, l'accumulateur hydraulique est en outre relié au moteur hydraulique.

Cela présente plusieurs intérêts.

Lors de la course retour du piston, après l'opération de pressage, le moteur hydraulique peut fonctionner à l'envers telle une pompe hydraulique, et ainsi recharger l'accumulateur hydraulique. Autrement dit, le moteur hydraulique est avantageusement réversible. L'énergie hydraulique récupérée est alors stockée dans l'accumulateur hydraulique peut avantageusement être réutilisée lors d'une phase ultérieure de déplacement du piston. Ce système permet de réduire sensiblement l'énergie requise par rapport à une machine traditionnelle.

Une récupération d'énergie peut également avoir lieu en cas de freinage du déplacement du piston, ou bien lors d'une phase de décélération du moteur hydraulique.

Avantageusement, le dispositif de commande comporte en outre un dispositif de mesure pour déterminer l'effort appliqué par le piston sur les végétaux. Cet effort est préférentiellement déterminé à l'aide de la valeur du couple de l'excentrique, et de sa position angulaire. Le couple de l'excentrique est notamment déterminé par mesure de la pression hydraulique. Dans la mesure où la pression hydraulique peut être mesurée de façon précise, il s'ensuit que l'invention permet avantageusement de déterminer de façon précise l'effort appliqué par le piston sur les végétaux.

La détermination de l'effort appliqué par le piston sur les végétaux permet avantageusement de déterminer la densité de la balle, qui peut varier selon l'humidité et/ou la température ambiante. Aussi, la puissance délivrée par le moteur hydraulique sur le piston pourra être ajustée en fonction de la densité de la balle en cours de formation.

Selon un mode de réalisation préférentiel, mais non exclusif, la machine est tractée par un tracteur, et en ce que l'élément d'entrainement en rotation est une prise de puissance du tracteur.

Selon une variante, ladite machine est automotrice. Dans ce cas, l'élément d'entrainement est un arbre de rotation de la machine.

De façon connue, la machine selon l'invention comporte en outre un dispositif lieur pour lier les balles à l'aide de fils avant évacuation de la balle.

### Brève description des dessins

L'invention sera mieux comprise à la lecture de la description qui suit d'un mode de mise en œuvre de l'invention donné à titre d'exemple non limitatif, en référence aux dessins annexés, sur lesquels :
- la figure **1** est une vue schématique de la machine selon l'invention, tractée par un tracteur, les végétaux étant amenés dans la chambre de pressage afin de former une nouvelle balle ;
- les figures **2** et **3** illustrent la machine de la figure **1** pendant une phase de pressage, par déplacement du piston dans la chambre de pressage, afin de former une première portion de la nouvelle balle ;
- la figure **4** illustre le retour du piston, et le remplissage de la chambre de pressage ;
- la figure **5** illustre une phase subséquente de pressage au cours de laquelle on forme la seconde portion de la nouvelle balle ;
- la figure **6** illustre le retour du piston, la nouvelle balle étant formée, tandis que la balle précédente est au sol ; et
- la figure **7** est une vue schématique du circuit hydraulique de la machine selon l'invention.

### Description détaillée de l'invention

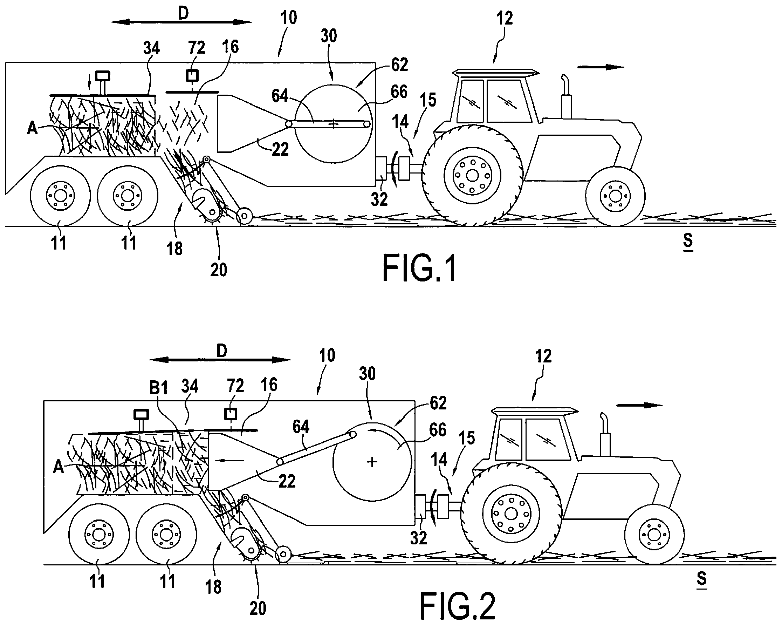

Sur les figures **1** à **6****,** on a illustré un exemple d'une machine **10** selon l'invention pour réaliser des balles **B**, dites « rectangulaires » à partir de végétaux **V,** telle de la paille par exemple. Cette machine est mobile par rapport au sol **S.** Dans cet exemple, la machine **10** est tractée par un tracteur **12,** connu par ailleurs, qui comporte en partie arrière un élément d'entrainement en rotation **14,** généralement appelé « prise de puissance ».

Pour permettre son déplacement, la machine **10** comporte des roues **11.**

Dans cet exemple, les végétaux sont constitués de tiges, préalablement coupées et regroupées sur le sol en amas longitudinaux.

La machine **10** comporte de façon connue une chambre de pressage **16** dans laquelle la paille est pressée pour former une balle rectangulaire, et un dispositif d'amenée **18** pour amener les végétaux dans la chambre de pressage **16.** De façon connue, le dispositif d'amenée **18** est associé à un dispositif de ramassage **20** pour ramasser la paille et la diriger vers le dispositif d'amenée **18.** Le dispositif de ramassage **20** pourra être constitué d'un tambour entrainé en rotation dans le sens inverse du sens d'avancée de la machine **10.** Les dispositifs d'amenée sont connus par ailleurs. On pourra utiliser par exemple un peigne opérant un mouvement de va et vient pour pousser la paille dans la chambre de pressage **16.**

Pour presser la paille et former les balles, la machine **10** comporte un piston **22** qui est mobile en translation selon une direction D dans la chambre de pressage. La machine **10** comporte par ailleurs un dispositif d'entrainement **30** qui est agencé pour entrainer le piston **22** en translation. Ce dispositif d'entrainement comporte un organe de couplage **32** agencé pour être connecté à l'élément d'entrainement en rotation **14,** c'est-à-dire la prise de puissance **15** du tracteur **12.**

De façon connue, la machine **10** comporte au moins une plaque de tension **34** disposée en partie supérieure de la chambre de pressage **16,** cette plaque de tension ayant pour fonction d'exercer une pression sur la balle en formation. On pourra également prévoir des plaques de tension latérales (non illustrées ici).

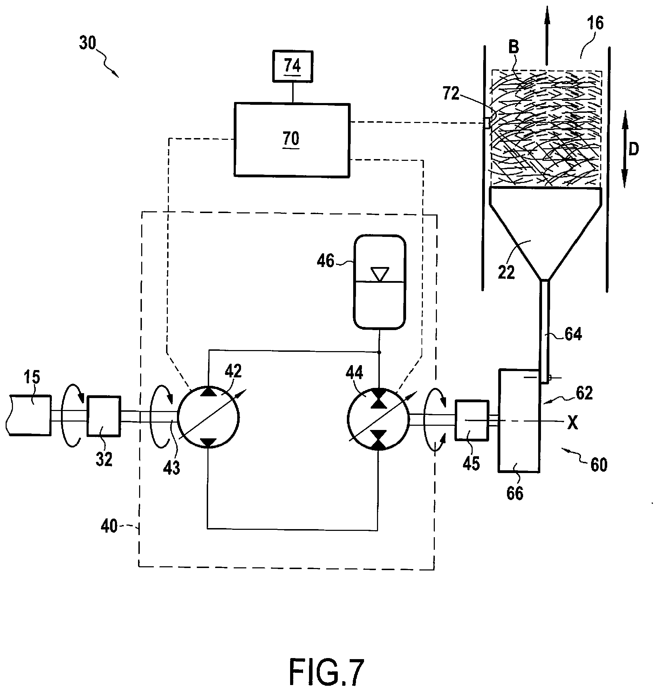

Conformément à l'invention le dispositif d'entrainement **30** comporte en outre un dispositif hydraulique **40,** illustré en figure **7****.** Ce dispositif hydraulique **40** comprend une pompe hydraulique **42** reliée à l'organe de couplage **32.** Comme exposé ci-dessus, l'organe de couplage **32** est relié à la prise de puissance **15** du tracteur. On comprend donc que la mise en rotation de la prise de puissance **15** du tracteur a pour effet de mettre en rotation l'arbre **43** de la pompe hydraulique **42,** par l'intermédiaire de l'organe de couplage **32.** Dans cet exemple, la pompe hydraulique **42** est du type à cylindrée variable.

Le dispositif hydraulique **40** comprend en outre un moteur hydraulique **44** qui est alimenté par la pompe hydraulique **42.** Dans cet exemple, le moteur hydraulique **44** est réversible. Il peut donc fonctionner comme une pompe. En outre, le moteur est du type à cylindrée variable.

Comme on le constate sur la figure **7****,** dans cet exemple, le dispositif hydraulique **40** comporte en outre au moins un accumulateur hydraulique **46** qui est relié à la pompe hydraulique **42,** d'une part, et au moteur hydraulique **44,** d'autre part.

En revenant à la figure **7****,** on constate que le dispositif d'entrainement **30** comporte en outre un organe d'entrainement **60** qui est entrainé par le moteur hydraulique **44** et qui est configuré pour déplacer le piston **22** en translation selon la direction **D.** Dans cet exemple, l'organe d'entrainement **60** comporte un dispositif **62** du type bielle/manivelle, qui comporte une bielle **64** montée en liaison pivot au piston **22.** Le dispositif **62** comporte en outre un excentrique **66,** faisant office de manivelle, qui est relié à la bielle **64,** d'une part, et au moteur hydraulique **44,** d'autre part. Dans cet exemple, il est prévu un réducteur **45** entre le moteur hydraulique **44** et l'excentrique **66.**

Conformément à l'invention, le dispositif d'entrainement **30** comporte en outre un dispositif de commande **70** qui est relié au dispositif hydraulique pour commander le déplacement du piston. Dans cet exemple, le dispositif de commande **70** est configuré pour commander la pompe hydraulique **42** et le moteur hydraulique **44.**

Dans ce mode de réalisation, la machine **10** comporte en outre au moins un capteur **72,** disposé dans la chambre de pressage, pour déterminer le taux de remplissage de la chambre de pressage **16.** Ce capteur **72** est relié au dispositif de commande. Dans cet exemple, le capteur **72** comporte une ou plusieurs plaquettes actionnées par les végétaux lorsque la chambre de pressage est remplie de paille. La pression exercée par la paille sur les plaquettes est telle que cela déclenche un signal représentatif du taux de remplissage de la chambre de pressage.

De façon avantageuse, le dispositif de commande **70** est configuré pour actionner le déplacement du piston **22** lorsque le taux de remplissage mesuré par le capteur **72** est supérieur à un seuil prédéterminé.

Par ailleurs, la machine comporte en outre un dispositif de mesure **74** pour déterminer l'effort appliqué par le piston **22** sur les végétaux. Pour ce faire, dans cet exemple, le dispositif de mesure **74** se base sur le couple exercé par l'excentrique **66** ainsi que sa position angulaire autour de son axe de rotation **X.** Ces valeurs sont déterminées par des capteurs appropriés (non illustrés ici).

A l'aide des figures **1** à **6** on va maintenant expliquer le fonctionnement de la machine **10** selon l'invention.

Au démarrage du tracteur, la chambre de pressage **16** étant vide, la mise en rotation de la prise de puissance **15** a pour effet de mettre en rotation la pompe hydraulique **42.** A ce moment, la machine n'effectue aucun mouvement, le piston reste immobile et le dispositif d'amenée est également immobile dès lors qu'aucune vitesse d'avancement n'est détectée. En conséquence, il n'y a pas ou très peu de consommation d'énergie pour faire fonctionner la machine à ce moment-là. Dans cet exemple, on a illustré en figure **1** la formation d'une nouvelle balle **B**, étant précisé qu'une première balle **A** a été précédemment formée.

Au démarrage du tracteur, le couple à la prise de puissance **15** augmente jusqu'à ce que l'accumulateur **46** soit complétement chargé grâce à la pompe **42.** Après la mise en mouvement de la machine **10** par rapport au sol, le dispositif de ramassage **20** et le dispositif d'amenée **18** sont actionnés et amènent la paille dans la chambre de pressage **16.**

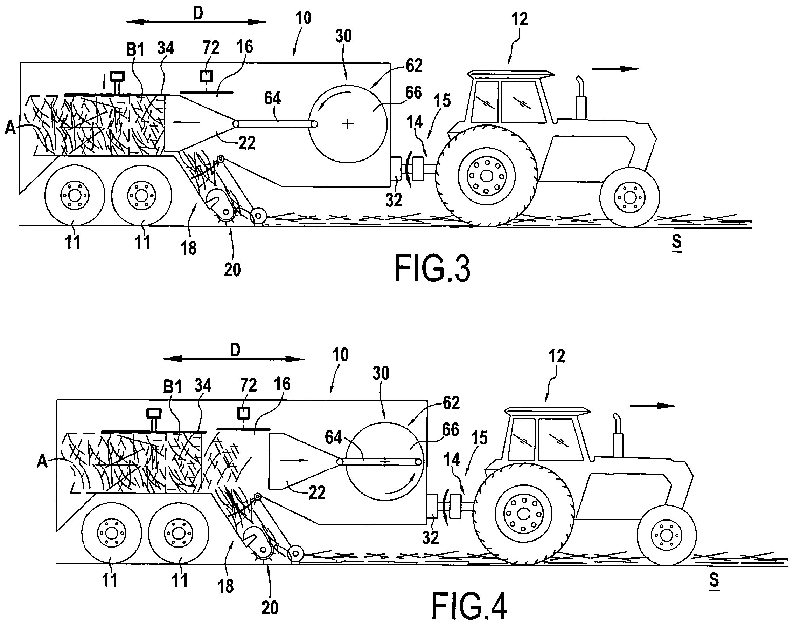

Lorsque le capteur **72** a déterminé que la chambre de pressage **16** est suffisamment remplie, le dispositif de commande actionne le déplacement du piston **22,** comme cela est illustré en figures **2** et **3****.** Le piston comprime alors les végétaux afin de former une première portion **B1** de la balle **B.** On comprend que la première portion **B1** est comprimée entre la première balle **A** et le piston. Concomitamment, la plaque de tension **34** exerce une pression sur le haut de première portion **B1** de la balle en formation. Autrement dit, tant que la chambre de pressage **16** n'est suffisamment rempliée, le piston **22** ne bouge pas, contrairement à l'art antérieur où le piston est constamment animé d'un mouvement de va et vient.

Comme illustré en figure **4****,** après le premier pressage et la formation de la première portion **B1**, le piston recule afin de dégager la chambre de pressage **16.**

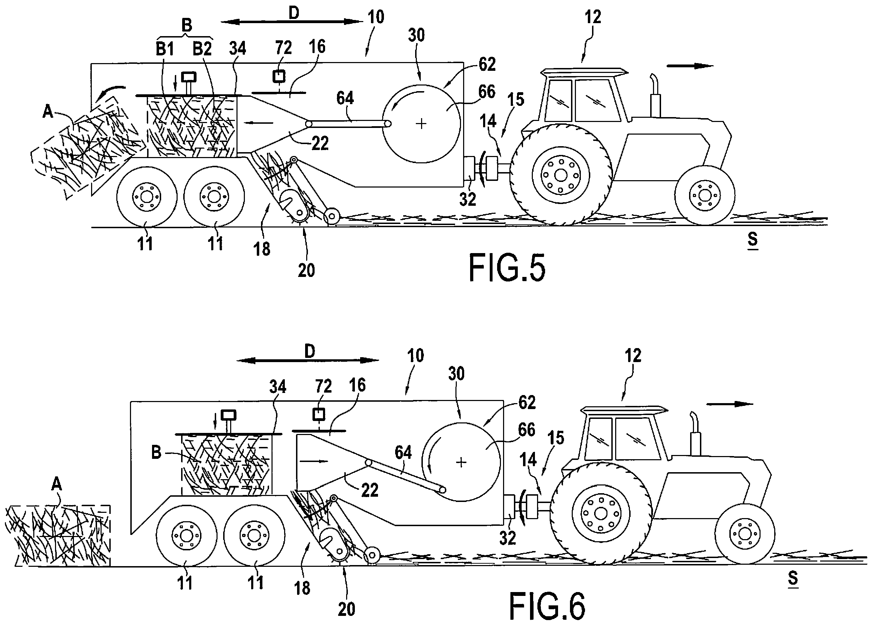

Une fois que cette dernière est à nouveau suffisamment remplie grâce aux moyens d'amenée, le piston est actionné afin de comprimer les végétaux entre la première portion **B1** et le piston, ce qui crée une deuxième portion **B2** de la balle **B**, tel qu'illustrée en figure **5****.**

On comprend que les première et deuxième portions **B1** et **B2** sont juxtaposées et forment la balle **B.** Dans cet exemple illustratif, la balle **B** est réalisée à l'issue de deux cycles de pressage. En outre, les première et deuxième portions **B1** et **B2** sont ficelées ensemble par des moyens appropriés, connus par ailleurs.

En pratique, on peut prévoir une vingtaine de cycles d'allers-retours du piston afin de former une balle standard de 2.4 mètres de long, 1.2 mètres de hauteur et 0.9 mètres de large.

Comme illustré en figure **5****,** lors de la formation de la deuxième balle **B**, la première balle **A** est progressivement poussée vers la sortie aval de la machine, jusqu'au moment où elle tombe sur le sol.

La figure **6** illustre le retour du piston après formation de la balle **B.**

La balle **B** est ficelée au fur et à mesure de la progression de sa formation grâce à des relieurs, connus par ailleurs et non illustré ici.

Selon un aspect avantageux, lors du retour du piston **22** vers l'excentrique, le moteur **44** fonctionne comme une pompe hydraulique et génère une énergie hydraulique qui est stockée dans l'accumulateur **46.** Cette énergie pourra être utilisée pour une phase ultérieure de pressage.

## Revendications

1. Machine (10) pour réaliser des balles (B) à partir de végétaux (V), ladite machine étant mobile par rapport au sol et comportant :
une chambre de pressage (16) ;
un dispositif d'amenée (18) pour amener les végétaux dans la chambre de pressage (16) ;
un piston mobile (22) en translation dans la chambre de pressage (16) pour presser les végétaux;
un dispositif d'entrainement (30) ayant un organe de couplage (32) agencé pour être connecté à un élément d'entrainement en rotation (14), le dispositif d'entrainement étant par ailleurs agencé pour entrainer le piston (22) en translation ;
la machine étant **caractérisée par le fait que** le dispositif d'entrainement (30) comporte en outre :
un dispositif hydraulique (40) comprenant
une pompe hydraulique (42) reliée à l'organe de couplage (32);
un moteur hydraulique (44) alimenté par la pompe hydraulique (42) ;
un organe d'entrainement (60) entrainé par le moteur hydraulique et configuré pour déplacer le piston (22) en translation ; et
un dispositif de commande (70) relié au dispositif hydraulique (40) pour commander le déplacement du piston.

2. Machine selon la revendication 1, **caractérisée en ce qu'**elle comporte en outre au moins un capteur (72), pour déterminer le taux de remplissage de la chambre de pressage, ledit capteur (72) étant relié au dispositif de commande, et **en ce que** le dispositif de commande (76) est configuré pour actionner le déplacement du piston (22) lorsque le taux de remplissage est supérieur à un seuil prédéterminé.

3. Machine selon la revendication 1 ou 2, **caractérisée en ce que** l'organe d'entrainement (60) comporte un dispositif (62) du type bielle/manivelle.

4. Machine selon l'une quelconque des revendications précédentes, **caractérisée en ce que** la pompe hydraulique (42) est à débit variable, de préférence à cylindrée variable.

5. Machine selon l'une quelconque des revendications précédentes, **caractérisée en ce que** le moteur hydraulique (44) est à débit variable, de préférence à cylindrée variable.

6. Machine selon l'une quelconque des revendications précédentes, **caractérisée en ce que** le moteur hydraulique (44) est réversible.

7. Machine selon l'une quelconque des revendications précédentes, **caractérisée en ce que** le dispositif hydraulique (40) comporte en outre au moins un accumulateur hydraulique (46) relié à la pompe hydraulique (42).

8. Machine selon la revendication 7, **caractérisée en ce que** l'accumulateur hydraulique (46) est en outre relié au moteur hydraulique (44).

9. Machine selon l'une quelconque des revendications précédentes, comportant en outre un dispositif de mesure (74) pour déterminé un effort appliqué par le piston (22) sur les végétaux.

10. Machine (10) selon l'une quelconque des revendications précédentes, précédentes, **caractérisée en ce que** la machine est tractée par un tracteur (12), et **en ce que** l'élément d'entrainement en rotation (14) est une prise de puissance (15) du tracteur.

11. Machine selon l'une quelconque des revendications 1 à 9, **caractérisée en ce que** ladite machine est automotrice.

## Patentansprüche

1. Maschine (10) zum Herstellen von Ballen (B) aus Pflanzenmaterial (V), wobei die Maschine relativ zum Boden verfahrbar ist und folgende Komponenten aufweist:
eine Presskammer (16);
eine Zuführvorrichtung (18) zum Zuführen von Pflanzenmaterial in die Presskammer (16);
einen in der Presskammer (16) translatorisch beweglichen Kolben (22) zum Pressen des Pflanzenmaterials;
eine Antriebsvorrichtung (30) mit einem Kopplungsglied (32), welches so angeordnet ist, dass es mit einem Drehantriebselement (14) verbunden werden kann, wobei die Antriebsvorrichtung außerdem so angeordnet ist, dass sie den Kolben (22) translatorisch antreibt; wobei die Maschine **dadurch gekennzeichnet ist, dass** die Antriebsvorrichtung (30) weiterhin aufweist:
eine Hydraulikvorrichtung (40) mit
einer Hydraulikpumpe (42), die mit dem Kopplungsglied (32) verbunden ist;
einen Hydraulikmotor (44), der von der Hydraulikpumpe (42) gespeist wird;
ein Antriebsmittel (60), das von dem Hydraulikmotor angetrieben wird und so ausgebildet ist, dass es den Kolben (22) translatorisch bewegt; und
eine Steuervorrichtung (70), die mit der Hydraulikvorrichtung (40) verbunden ist, um die Bewegung des Kolbens zu steuern.

2. Maschine nach Anspruch 1, **dadurch gekennzeichnet, dass** diese ferner zumindest einen Sensor (72) aufweist, um den Füllgrad der Presskammer zu ermitteln, wobei der Sensor (72) mit der Steuervorrichtung verbunden ist, und wobei die Steuervorrichtung (76) so konfiguriert ist, dass sie die Bewegung des Kolbens (22) in Gang setzt, wenn der Füllgrad über einem vorbestimmten Schwellenwert liegt.

3. Maschine nach Anspruch 1 oder 2, **dadurch gekennzeichnet, dass** das Antriebsmittel (60) eine Vorrichtung (62) vom Pleuel/Kurbel-Typ aufweist.

4. Maschine nach einem der vorherigen Ansprüche, **dadurch gekennzeichnet, dass** die Hydraulikpumpe (42) eine Verstellpumpe darstellt, vorzugsweise eine Verstellpumpe mit verstellbarem Hubraum.

5. Maschine nach einem der vorherigen Ansprüche, **dadurch gekennzeichnet, dass** der Hydraulikmotor (44) eine variable Förderleistung aufweist, vorzugsweise mittels eines verstellbaren Hubraums.

6. Maschine nach einem der vorherigen Ansprüche, **dadurch gekennzeichnet, dass** der Hydraulikmotor (44) reversibel ist.

7. Maschine nach einem der vorherigen Ansprüche, **dadurch gekennzeichnet, dass** die Hydraulikvorrichtung (40) ferner zumindest einen mit der Hydraulikpumpe (42) verbundenen Hydraulikspeicher (46) aufweist.

8. Maschine nach Anspruch 7, **dadurch gekennzeichnet, dass** der Hydraulikspeicher (46) zusätzlich mit dem Hydraulikmotor (44) verbunden ist.

9. Maschine nach einem der vorherigen Ansprüche, ferner aufweisend eine Messvorrichtung (74) zur Bestimmung einer vom Kolben (22) auf das Pflanzenmaterial ausgeübten Kraft.

10. Maschine (10) nach einem der vorherigen Ansprüche, **dadurch gekennzeichnet, dass** die Maschine von einem Traktor (12) gezogen wird, und dass das Drehantriebselement (14) eine Zapfwelle (15) des Traktors darstellt.

11. Maschine nach einem der Ansprüche 1 bis 9, **dadurch gekennzeichnet, dass** die Maschine selbstbetrieben ist.

## Claims

1. A machine (10) intended to carry out bales (B) from crop (V), said machine being movable relatively to the ground and including :
a pressing chamber (16) ;
a feeding device (18) intended to bring the crop into the pressing chamber (16) ;
a piston (22) movable in translation within the pressing chamber (16) to press the crop ;
a driving device (30) having a coupling member (32) arranged to be connected to a rotational driving element (14), the driving device being further arranged to drive the piston (22) in translation;
the machine being **characterized by** the fact that the driving device (30) further includes :
a hydraulic device (40) comprising
a hydraulic pump (42) connected to the coupling member (32);
a hydraulic motor (44) supplied by the hydraulic pump (42);
a driving member (60) driven by the hydraulic motor and configured to move the piston (22) in translation; and
a control device (70) connected to the hydraulic device (40) in order to control the piston displacement.

2. The machine according to claim 1, **characterized in that** it further includes at least one sensor (72), in order to determine the filling rate of the pressing chamber, said sensor (72) being connected to the control device, and **in that** the control device (76) is configured to actuate the displacement of the piston (22) when the filling rate is higher than a predetermined threshold.

3. The machine according to claim 1 or 2, **characterized in that** the driving member (60) comprises a device (62) of the rod/crank type.

4. The machine according to any of the preceding claims, **characterized in that** the hydraulic pump (42) has a variable flow rate, preferably a variable displacement.

5. The machine according to any of the preceding claims, **characterized in that** the hydraulic motor (44) has a variable flow rate, preferably a variable displacement.

6. The machine according to any of the preceding claims, **characterized in that** the hydraulic motor (44) is reversible.

7. The machine according to any of the preceding claims, **characterized in that** the hydraulic device (40) further includes at least a hydraulic accumulator (46) connected to the hydraulic pump (42).

8. The machine according to claim 7, **characterized in that** the hydraulic accumulator (46) is further connected to the hydraulic motor (44).

9. The machine according to any of the preceding claims, further including a measurement device (74) intended to determine an effort applied by the piston (22) to the crop.

10. The machine (10) according to any of the preceding claims, **characterized in that** the machine is drawn by a tractor (12), and **in that** the rotational driving element (14) is a power take-off (15) of the tractor.

11. The machine according to any of claims 1 to 9, **characterized in that** said machine is motorized.
